# EUROPEAN PATENT APPLICATION

(11) **EP 4 699 725 A1**
(43) Date of publication of application: **25.02.2026**
(21) Application number: 24195984.0
(22) Date of filing: 22.08.2024
(51) Int. Cl.: B23C 5/24, B23C 5/22, B23B 29/034

(54) **TOOL CARTRIDGE, CUTTING TOOL INCLUDING THE SAME AND METHOD FOR ADJUSTING A CUTTING TOOL**

(71) Applicant: KYOCERA UNIMERCO TOOLING A/S, 7451 Sunds (DK)
(72) Inventor: Thomsen, Tyge Roslin, 7430 Ikast (DK); Wulff, Michael Bank, 7400 Herning (DK)
(74) Representative: Viering, Jentschura & Partner mbB Patent- und Rechtsanwälte

(57) **Abstract**

A tool cartridge (1) for a cutting tool (100) is provided with a first end (3a) and a second end (3b), a longitudinal axis (X) extending there between, a first side (11), and a second side (12) opposite to the first side (11), comprising: A top surface (5) extending from the first end (3a) towards the second end (3b), a bottom surface (7) opposite to the top surface (5), a first side surface (13) extending along the first side (11) and a second side surface (15) extending along the second side (12), an end surface (17) located at the first end (3a) and extending between the first and the second side surface (13, 15), an insert pocket (19) configured for accommodation of a cutting insert (140), wherein the insert pocket (19) is recessed in the top surface (5) and opens into the second side surface (15) and the end surface (17), a groove structure (40) recessed from the top surface (5) to the bottom surface (7) and having a first, a second, a third groove portion and a connection portion, the first to third groove portions being continuously connected by the connection portion of the groove structure (40), wherein an elastically deformable first land portion is formed between the end surface (17) and a first groove portion, an elastically deformable second land portion is formed between the second side surface (15) and a second groove portion, and an elastically deformable third land portion is formed between the first side surface (13) and a third groove portion, a first adjustment means configured for pivoting the insert pocket (19) with the third land portion as hinge point by elastically biasing the insert pocket (19) towards the second side (12), and a second adjustment means configured for pivoting the insert pocket (19) with the first land portion as hinge point by elastically biasing the insert pocket (19) towards the second side (12).

## Description

### TECHNICAL FIELD

The present disclosure relates to a tool cartridge, a cutting tool including the tool cartridge and a method for adjusting a cutting tool, and in particular to a tool cartridge attachable at a drill and/or a reamer capable of adjusting diameter and taper of a cutting edge of the tool.

### BACKGROUND

Manufacturing holes in materials like metal is a well-known manufacturing technique in various applications like mechanical engineering, aeronautical engineering, automotive engineering, etc. In particular in a case when the holes have high requirements for smoothness and dimensional as well as form tolerances like parallelism and cylindricity etc., e.g. in case of cylinder walls of an internal combustion engine, a drill out and/or reaming process for achieving said requirements is carried out at the walls of the hole.

In a drill out process premanufactured walls of a hole, e.g. casted walls, are drilled out by increasing the diameter of the hole, e.g. typically by some millimeters, so as to achieve a desired diameter and surface properties of the drilled hole. A (possible) additional reaming process can be carried out in the same step as the drilling or as a separate subsequent step. During the reaming process, small amounts of material are removed from the walls using a rotating cutting edge, i.e. the drilled hole is increased in diameter by typically some tens of microns. In the case of holes having several centimeters of diameter, the cutting edge of a drill and/or reamer is often provided by an exchangeable cutting insert (exchangeable due to wear of the cutting edge), which is held in a tool cartridge fixed to the cutting tool. Such cutting tools often carry several tool cartridges in respective cartridge pockets formed at an outer circumference of the cutting tool.

Due to the high accuracy of the drill out process and reaming process, cutting diameter and taper of the cutting edge of the cutting tool (taper: e.g. angular deviation of a cutting edge from a rotation axis of the cutting tool) has to be precisely adjusted, e.g. in the range of some microns for reamers. Thus, bending of the tool cartridge, centrifugal forces during machining, etc. have an effect on the radial position (cutting diameter) and taper of the cutting edge and have to be accounted for. At the same time, precise adjustment of the cutting insert requires the cutting insert to be fixed at the tool cartridge, which in turn needs to be fixed to the cutting tool. Thus, handling of e.g. screws and tools for adjusting the cutting diameter and taper is carried out in a confined space of the cartridge pocket, and handling is consequently often burdensome and requires dexterity of the person adjusting the cutting insert.

Thus, there is a need for a tool cartridge capable of easily and precisely adjusting radial position and taper of a cutting insert, as well as a cutting tool and adjustment method thereof.

### BRIEF SUMMARY

To solve said problem, the present disclosure provides a tool cartridge with the features according to claim 1, a cutting tool with the features according to claim 12 and a method for adjusting a cutting tool with the features according to claim 15. Further preferred embodiments of the tool cartridge and the cutting tool are described in the respective dependent claims.

That is, a tool cartridge for a cutting tool is provided, the tool cartridge having a first end (e.g. cutting end) and a second end (e.g. attachment end, e.g. attachable to a cutting tool), a longitudinal axis extending there between, a first side, and a second side opposite to the first side with the longitudinal axis located there between, the tool cartridge comprising: A top surface extending (e.g. parallel to the longitudinal axis) from the first end towards the second end, a bottom surface opposite (e.g. and parallel) to the top surface, a first side surface extending along the first side and a second side surface extending along the second side (e.g. the first and second side surface are parallel to each other), an end surface located at the first end and extending (e.g. perpendicular to the longitudinal axis) between the first and the second side surface, an insert pocket configured for accommodation of a cutting insert, wherein the insert pocket is recessed in the top surface and opens into the second side surface and the end surface, a groove structure recessed from the top surface to the bottom surface and having a first, a second, a third groove portion (e.g. end portion, e.g. a rounded end portion, e.g. in the shape of a droplet) and a connection portion, the first to third groove portions being continuously connected by the connection portion of the groove structure (e.g. forming a linear groove structure in which the first groove portion is connected to the second groove portion via the connection portion, and the second groove portion is connected to the third groove portion via the connection portion, i.e. in the stated sequence, or the first groove portion is connected to the third groove portion via the connection portion, and the third groove portion is connected to the second groove portion via the connection portion, i.e. in the stated sequence, or e.g. forming bifurcating or branching structure in which each of the first to third groove portions is connected to each other groove portion by the connection portion interposed therebetween), wherein, in a plan view of the top surface, the first groove portion is located, when seen along the longitudinal axis, between the end surface and an end of the insert pocket facing the second end (e.g. closer to the first end surface than to the end of the insert pocket facing the second end) and is located, when seen in a cross direction of the longitudinal axis, between the first side surface and the insert pocket (e.g. closer to the insert pocket than the first side surface), and wherein an elastically deformable first land portion (e.g. portion with reduced stiffness compared to the adjacent portions of the tool cartridge) is formed between the end surface and the first groove portion, the second groove portion is located, when seen along the longitudinal axis, between the insert pocket and the second end (e.g. closer to the insert pocket than the second end) and is located, when seen in a cross direction of the longitudinal axis, between the second side surface and an end of the insert pocket facing the first side (e.g. in the middle therebetween), and wherein an elastically deformable second land portion (e.g. portion with reduced stiffness compared to the adjacent portions of the tool cartridge) is formed between the second side surface and the second groove portion, and the third groove portion is located, when seen along the longitudinal axis, between the insert pocket and the second end (e.g. closer to the second end than the second groove portion) and is located, when seen in a cross direction of the longitudinal axis, closer to the first side surface than the first groove portion (e.g. in the middle therebetween), and wherein an elastically deformable third land portion (e.g. portion with reduced stiffness compared to the adjacent portions of the tool cartridge) is formed between the first side surface and the third groove portion, a first adjustment means configured for pivoting the insert pocket with the third land portion as hinge point by elastically biasing the insert pocket towards the second side (e.g. using a screw, wedge, etc. for exerting a corresponding force on the tool cartridge towards the second side), and a second adjustment means configured for pivoting the insert pocket with the first land portion as hinge point by elastically biasing the insert pocket towards the second side (e.g. using a screw, wedge, etc. for exerting a corresponding force on the tool cartridge towards the second side).

Further, the connection portion of the groove structure may include a central section, a first branch, a second branch and a third branch, wherein each of the branches, at one end, is connected to the central section and extends away from the central section and, at the other end, is connected to the first, second and third groove portion, respectively (e.g. forming a bifurcating or branching structure).

Further, in the plan view of the top surface, the central section may be located in a triangle formed by lines connecting the first to third land portions as corners of the triangle (e.g. at a respective boundary of the land portion and the corresponding groove portion where the land portion has its minimum thickness), optionally the central section may be located, when viewed along the longitudinal axis, in the middle between the first and third groove section, and, when viewed in the cross direction, in the middle between the second and third groove section.

Further, in the plan view of the top surface, the central section may have a quadrangular shape (e.g. rectangular) extending (e.g. parallel) with a larger length along the longitudinal axis than along a cross direction of the longitudinal axis, wherein in the cross direction of the longitudinal axis, a (e.g. maximum) width of the central section may be larger than a width of anyone of the first to third branches (e.g. each branch has the same width), e.g., said width of the central section in the cross direction of the longitudinal axis being five to ten times larger than the largest width of anyone of the first to third branches.

Further, the first to third branches may extend from three of four corners of the central section, e.g. wherein the first branch extends from the corner located closest to the first side surface and the end surface, the second branch extends from the corner located closest to the second side surface and second end, and the third branch extends from the corner located closest to the first side surface and second end.

Further, the first branch may extend from the first groove portion to the central section in a curved shape, e.g., the first branch is curved towards the first side and back away from the first side as going from the first groove portion towards the central section (e.g. connected to the central section via a 90° turn).

Further, the second branch may have a first leg connected to the second groove portion and a second leg connected to the first leg and the central section, wherein e.g. the first leg may extend from the second groove portion towards the first end (e.g. parallel to the longitudinal axis) and the second leg may extend from the first leg towards the first side.

Further, the second leg may extend perpendicular to the longitudinal axis, wherein in a first wall of the second leg located on a side of the first end an end stop protrusion protruding towards the second end is formed and in a second wall (e.g. opposing the first wall) of the second leg located on a side of the second end an end stop recess is formed in a shape corresponding to the end stop protrusion so that in the direction perpendicular to the longitudinal axis a gap is formed between the end stop protrusion and the end stop recess (e.g. the end stop protrusion and the end stop recess may be formed as a step in the second leg).

Further, a (e.g. semicircular or half elliptical) side recess may be formed in the second side surface so as to be recessed towards the second groove portion (e.g. and/or the first leg), and the second land portion is defined between the side recess and second groove portion (e.g. and the first leg), wherein e.g. the side recess has a length along the longitudinal axis which is larger than a length of the side recess in a cross direction of the longitudinal axis.

Further, the first adjustment means may comprise a first through hole starting in the end surface or the second side surface and extending into the first side surface (e.g. parallel to the top surface), the first through hole having a first hole axis which intersects the first groove portion and an inner thread formed in a section of the first through hole located between the first groove portion and the first side surface and configured for engagement with an adjustment screw (e.g. a grub screw or a headed screw) insertable from the side of the first end or from the side of the second side, wherein e.g., in the plan view of the top surface, the first hole axis is spaced away from an intersection of the end surface and the second side surface with a distance of at least a bore radius of the first through hole, and wherein e.g. the first through hole may start in the end surface and extend with an acute angle formed between the first hole axis and the longitudinal axis, wherein, preferably, the acute angle is in the range of 30° to 70°, more preferably in the range of 45° to 60°, and the second adjustment means may comprise a second through hole starting in the second side surface and extending (e.g. perpendicular to the longitudinal axis and parallel to the top surface) into the connection portion, preferably into the central section, of the groove structure, the second through hole having an inner thread formed therein and is configured for engagement with an adjustment screw (e.g. a grub screw or a headed screw), wherein e.g. the second through hole is located, in the plan view of the top surface, between the insert pocket and the second groove portion (and e.g. the second branch).

Further, the first adjustment means may comprise an adjustment protrusion protruding from the first side surface, preferably, in a plan view of the top surface, the adjustment protrusion is located, when seen along the longitudinal axis, between the end surface and an end of the insert pocket facing the second end, and the second adjustment means may comprise a horizontal screw hole starting in the first side surface and extending (e.g. parallel to the top surface) through the connection portion, preferably through the central section, of the groove structure towards the second side (e.g. opening into the second side surface), the horizontal through hole having an inner thread formed between the first side surface and the connection portion of the groove portion and is configured for engagement with an abutment screw (e.g. grub screw) insertable from the first side, wherein, e.g. the horizontal screw hole is located, in the plan view of the top surface, between the insert pocket and second groove portion, and a vertical screw hole starting in the top surface and extending towards the bottom surface, wherein the vertical screw hole intersects the horizontal screw hole and has an inner thread formed therein and is configured for engagement with a conical adjustment screw insertable from the top surface.

Furthermore, a cutting tool (e.g. a drill and/or a reamer, e.g. a system of a tool holder and tool cartridge) is provided, comprising: a holder having a rod shape extending from a first end (e.g. cutting end) to a second end (e.g. end hold by a machine like a drilling or reaming machine) a long a rotation axis and having a cartridge pocket (e.g. one, two, three or more), the above described tool cartridge and a cutting insert, wherein the cartridge pocket is located at the first end and opens into a circumferential surface and an end surface at the first end of the holder (e.g. in the case of two or more cartridge pockets said cartridge pockets are spaced from one another around the circumference (circumferential surface) of the holder), and has a first seating surface parallel to the rotation axis and facing in a rotation direction of the holder, wherein on the first seating surface the bottom surface of the tool cartridge is seated, and has a second seating surface connected to the first seating surface and facing in a radially outward direction of the holder, wherein on the second seating surface the first side surface of the tool cartridge is seated, and wherein the cutting insert is accommodated in the insert pocket of the tool cartridge so that the cutting insert extends radially outward of the circumferential surface of the holder (e.g. defining a cutting diameter and taper of the cutting tool) and extends axially (e.g. along the rotation axis) outward of the end surface of the holder.

Further, the cutting tool may comprise: a first adjustment screw in engagement with the inner thread of the first through hole, wherein a tip of the first adjustment screw is configured for protruding from the first side surface radially inwards towards the rotation axis and abutting on the second seating surface of the cartridge pocket, wherein the insert pocket is elastically biased radially outwards of the holder for adjusting a cutting diameter of the cutting tool by increasing or reducing a protrusion amount of the first adjustment screw, and a second adjustment screw in engagement with the inner thread of the second through hole, wherein a tip of the second adjustment screw is configured for protruding into the connection portion (e.g. central section) of the groove structure and abutting on a wall of the connection portion located on the first side, wherein the insert pocket is elastically biased radially outwards of the holder for adjusting a taper of the cutting tool by increasing or reducing the protrusion amount of the second adjustment screw.

Further, the holder may have a reception screw hole formed in the end surface and adjacent to the second seating surface, and the adjustment protrusion protrudes into the reception screw hole, and the cutting tool may further comprise a first conical screw inserted into the reception screw hole with a conical head contacting the adjustment protrusion, wherein the insert pocket is elastically biased radially outwards of the holder for adjusting a cutting diameter of the cutting tool by increasing or reducing an amount by which the first conical screw is screwed into the reception screw hole, an abutment screw inserted into the horizontal screw hole, wherein a tip of the abutment screw protrudes into the vertical screw hole, and a second conical screw inserted into the vertical screw hole with a conical head contacting the tip of the abutment screw, wherein the insert pocket is elastically biased radially outwards of the holder for adjusting a taper of the cutting tool by increasing or reducing an amount by which the second conical screw is screwed into the vertical screw hole.

Furthermore, a method for adjusting the above described cutting tool comprises: measuring (e.g. directly or indirectly) a first distance between the rotation axis of the holder and a first radially outer corner (e.g. cutting corner) of the cutting insert located closest to the first end of the holder, increasing or reducing the first distance by increasing or reducing a biasing force of the first adjustment means (e.g. thereby adjusting the cutting diameter of the cutting tool), measuring (e.g. directly or indirectly) a second distance between the rotation axis of the holder and a second radially outer corner of the cutting insert located further away from the first end of the holder than the first corner, and increasing or reducing the second distance by increasing or reducing a biasing force of the second adjustment means (e.g. thereby adjusting the taper of the cutting tool).

The tool cartridge, cutting tool and method for adjusting the cutting tool as described above provide the advantageous technical effects:

Due to lack of additional separate parts of the tool cartridge (e.g. without moving parts of the tool cartridge like distinct hinges), a ligtweight and small tool cartridge can be provided, resulting in reduction of centrifugal forces when mounted on large diameter tools, e.g. for aluminium machining. For the same reasons, backlash when carrying out the adjustment of the tool cartridge is avoided, thereby providing an accurate means of adjustment of diameter and taper of the cutting tool.

Further, by the radial and/or axial access to first and second adjusmtent means and the thin structure of the tool cartridge, more space along the outer circumference of cutting tool is available, e.g. for other features such as guide pads, etc. At the same time radial access to first and/or second adjusmtent means provides good accessability via adjustment tools, e.g. screw drivers, on the fully equiped cutting tool.

Further, adjustment of diameter and taper of the cutting tool is achieved on the fully equiped cutting tool without the need to carry out outer diameter grinding of the cutting tool carrying multiple tool cartridges and cutting inserts.

Although the above described tool cartridge and cutting tool have been described in conjunction with drilling/reaming of holes, the present disclosure is not limited thereto. The described principles are generally applicable to rotary tools like chamfering tools or mills, e.g. end milling cutters. Furthermore, the described principles are also applicable to stationary tools for machining in which the work piece but not the tool rotates, e.g. lathe chisels.

In the following, the present disclosure is described in more detail by exemplary embodiments.

### BRIEF DESCRIPTION OF THE DRAWINGS

Fig. 1 shows a perspective view of a tool cartridge according to a first embodiment.
Fig. 2 shows a plan view on a top surface of the tool cartridge of Fig. 1.
Fig. 3 shows a plan view on a first side surface of the tool cartridge of Fig. 1.
Fig. 4 shows a plan view on a second side surface of the tool cartridge of Fig. 1.
Fig. 5 shows a plan view on an end surface of the tool cartridge of Fig. 1.
Fig. 6 shows an enlarged plan view of an area A on a top surface of the tool cartridge of Fig. 2.
Fig. 7 shows an enlarged plan view of an area A on a top surface of the tool cartridge of Fig. 2, wherein the tool cartridge is broken out in areas around a first and a second through hole.
Fig. 8 shows an enlarged view (plan view) of a groove structure of tool cartridge of Fig. 2.
Fig. 9 shows a plan view on a top surface of the tool cartridge of Fig. 2, representing an initial state (non-deformed; solid lines) and an adjusted state (elastically deformed; dashed lines) for adjusting a cutting diameter of a cutting tool (cutting insert).
Fig. 10 shows a plan view on a top surface of the tool cartridge of Fig. 2, representing an initial state (non-deformed; solid lines) and an adjusted state (elastically deformed; dashed lines) for adjusting a taper of a cutting tool (cutting insert).
Fig. 11 shows a perspective view of a cutting tool according to the first embodiment with attached tool cartridge and cutting insert.
Fig. 12 shows a side view of the cutting tool of Fig. 11.
Fig. 13 shows a perspective view of a tool cartridge according to a second embodiment.
Fig. 14 shows a plan view on a top surface of the tool cartridge of Fig. 13.
Fig. 15 shows a view of the tool cartridge cut along line A-A of Fig. 14.
Fig. 16 shows a perspective view of a cutting tool according to the second embodiment with attached tool cartridge and cutting insert.

### DETAILED DESCRIPTION

In the following detailed description, reference is made to the attached figures, which form part thereof and in which specific embodiments are shown for illustrative purposes. It is to be understood that the features of the specific embodiments described herein can be combined with each other, unless specifically stated otherwise (e.g. embodiments which combine, for example, tool cartridges clamped or screwed to the cutting tool, cutting inserts clamped, screwed or brazed to the tool cartridge, adjustment means using screws according to the first embodiment and/or the second embodiment, i.e. combinations of the screws of the first and the second embodiment, or wedges for adjusting radial position/taper of cutting insert, etc.).

Even without an explicit description, numerical values or ranges used herein are subject to the usual tolerances of ± 5%. Furthermore, designations such as "parallel" and "perpendicular" are subject to a tolerance range of ± 3° even without an explicit description.

The term "groove" or similar terms used herein like "groove structure", "groove portion", etc. designate a recess elongated in an extension direction and having, compared to its length in the extension direction, a smaller width (cross direction width) perpendicular to the extension direction.

In the figures, identical reference signs denote elements of the same function or nature in the embodiments.

### First embodiment - Tool cartridge

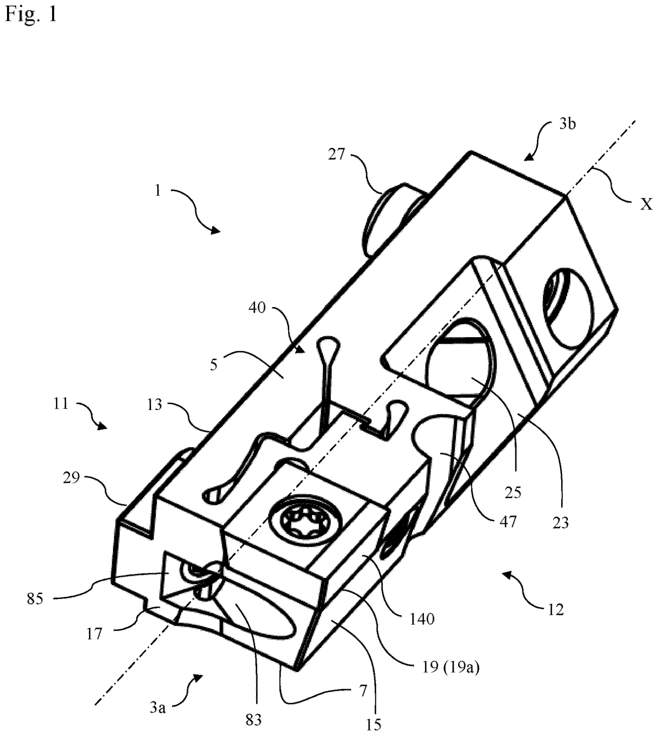

Referring to Figs. 1 to 10, a tool cartridge 1 according to a first embodiment of the present disclosure is described in the following. The tool cartridge 1 is usable in drilling applications of metal, e.g. for drilling holes in aluminum, but not limited thereto.

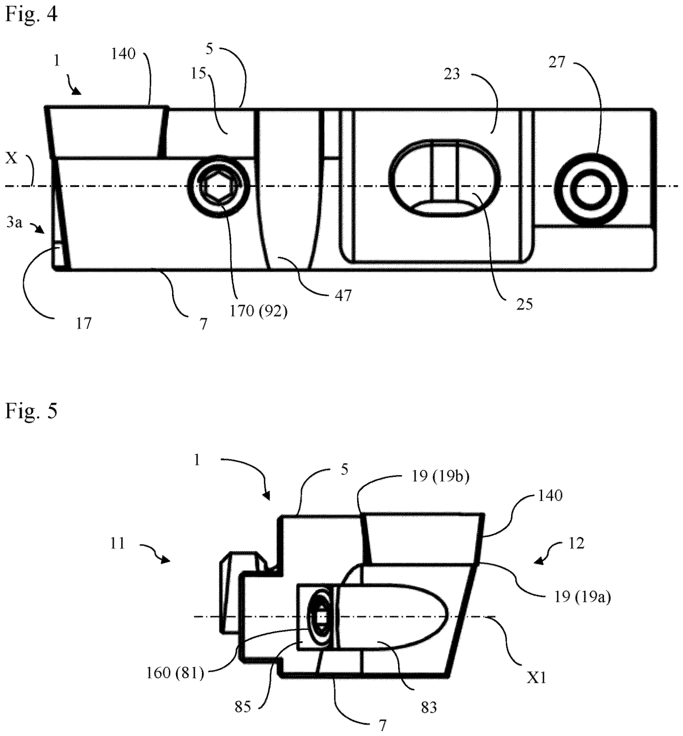

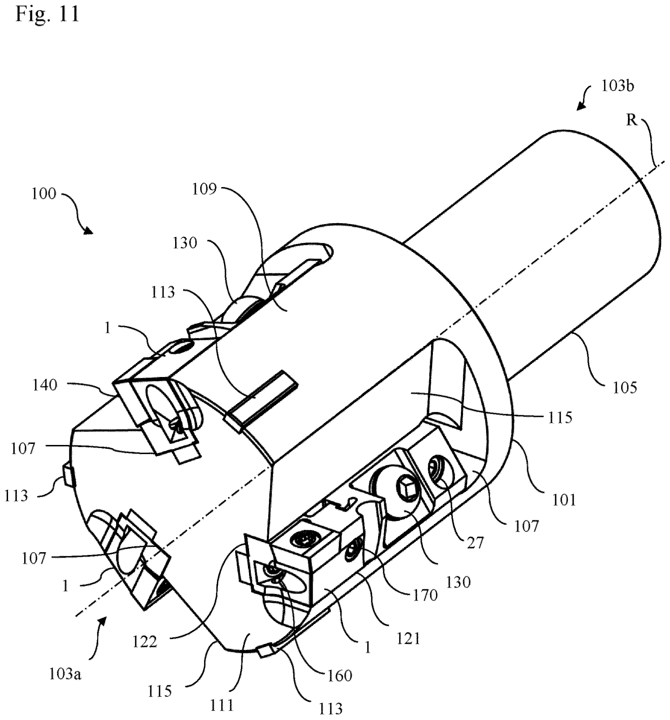

As can be seen in Figs. 1 to 5, the tool cartridge 1 extends, in a longitudinal direction thereof, from a first end 3a to a second end 3b, and between the first end 3a and the second end 3b a longitudinal axis X is defined. Parallel to the longitudinal axis X, a top surface 5 extending from the first end 3a towards the second end 3b and a bottom surface 7 opposite to the top surface 5 and parallel thereto are provided. A height direction is defined perpendicular to the top and bottom surfaces 5, 7. Perpendicular to the longitudinal axis X, i.e. in a cross direction of the tool cartridge 1, the tool cartridge 1 has a first side 11 (left in Fig. 5) and a second side 12 (right in Fig. 11). At each side 9, 11, the top surface 5 and the bottom surface 7 are connected by respective first and second side surfaces 13, 15, extending along said first and second sides 11, 12 with the longitudinal axis X located therebetween. An end surface 17 is located at the first end 3a, connecting to each of said top, bottom, first and second side surfaces 5, 7, 13, 15 and extending perpendicular to the longitudinal axis X. That is, the tool cartridge 1 has a rectangular bar shape with a greater length in the longitudinal direction than in the cross direction and the height direction. Typical (exemplary) overall dimensions of the tool cartridge may be 46,9 mm (longitudinal direction), 12,5 mm (height direction) and 15,4 mm (cross direction) for a drill with a cutting diameter of 200 mm.

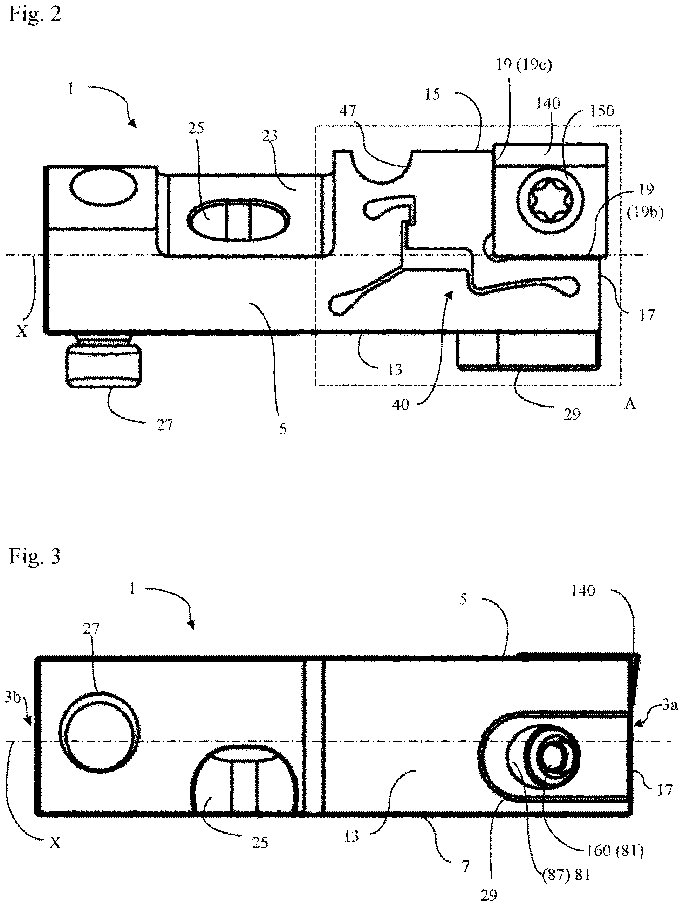

At the first end 3a an insert pocket 19 configured for accommodation of a cutting insert (described later) is provided, wherein the insert pocket 19 is recessed in the top surface 5 and opens into the second side surface 13 and the end surface 17, i.e. the insert pocket 19 is recessed in the height direction. In a plan view of the top surface 5 (see e.g. Fig. 2), the insert pocket 19 has a rectangular shape with a first constraining surface 19a (bottom) parallel to the top surface 5, and a second and third constraining surface 19b, c respectively connecting the first constraining surface 19a with the top surface 5. The second constraining surface 19b extends in the longitudinal direction and the third constraining surface 19c extends in the cross direction. A rounded exemption is provided at the intersection of the second and third constraining surfaces 19b, 19c. A insert screw hole 21 is defined in the first constraining surface 19a for attachment of the cutting insert. The shape of the insert pocket 19 may be different from the rectangular shape dependent on the shape of the cutting insert, e.g. may be triangular or circular. In the longitudinal direction, from the end surface 17 towards about at least half the distance between the first end 3a and the second end 3b, the second side surface 15 is inclined so as to be further away from the first side surface 13 as going away from the bottom surface 7, thereby providing a free space between the tool cartridge 1 and a wall of a drilled hole.

In the rear portion of the tool cartridge 1, an attachment recess 23 is formed inclined relative to the second side surface 11 and the top surface 5. The attachment recess 23 has a tool cartridge screw hole 25 formed therein, extending from the bottom of the attachment recess 23 to the first side surface 13 and (alternative: or) bottom surface 7 for attachment of the tool cartridge 1 at a holder (described later). Further and closer to the second end 3a than the attachment recess 23, the tool cartridge 1 includes an eccentric screw 27 accessible from the second side 12 and protruding from the first side surface 13 with its eccentric portion. The eccentric screw 27 is configured for adjusting a position of the tool cartridge 1 in the holder. A positioning protrusion 29 is formed at the first side surface 13 close to the first end 3a configured for positioning the tool cartridge 1 in the holder. In longitudinal direction, a front portion of the tool cartridge 1 extends from the end surface 17 to the attachment recess 23, and a rear portion of the tool cartridge 1 extends from the end of the front portion to the second end 3b. With regard to the functions of the front portion and the rear portion, the front portion is configured for carrying out cutting (and corresponding radial adjustment of the cutting insert accommodated in the insert pocket) and the rear portion is configured for attachment (fixation) of the tool cartridge 1 at the holder. The features described in this paragraph are common features of a tool cartridge 1, and are well known to the skilled person so that a further detailed description thereof is omitted.

The foregoing descriptions relate to a basic configuration of a tool cartridge 1, i.e. in particular regarding attachment at the tool holder. As a material, steel, cast iron, or the like may be used for the tool cartridge 1. Further, the tool cartridge 1 may be 3D printed (e.g. via powder bed fusion, e.g. selective laser melting, direct metal laser sintering, electron beam melting, etc.), optionally 3D printed and sintered (e.g. green body via binder jetting and subsequent sintering and/or liquid metal infusion).

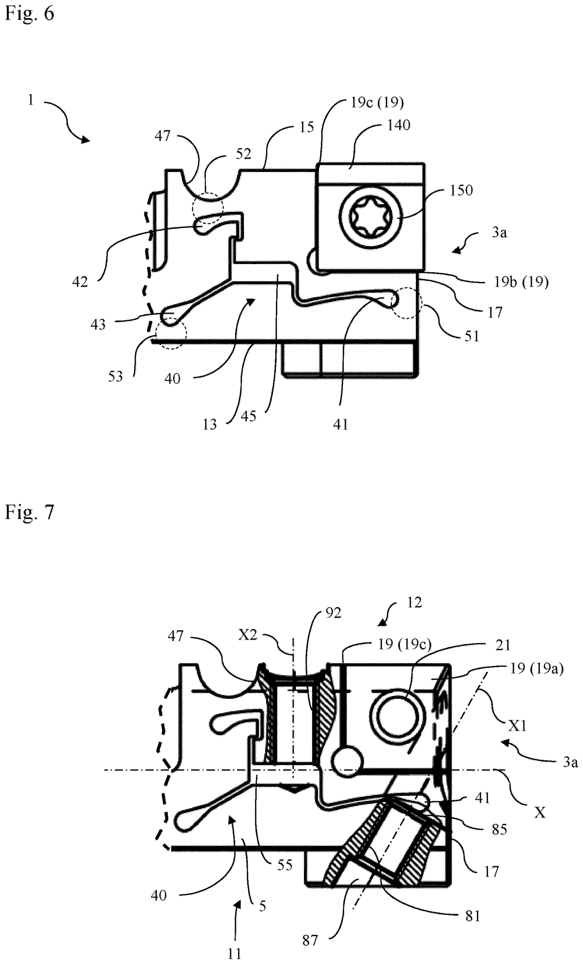

As can be seen in e.g. Fig. 6, a groove structure 40 is recessed from the top surface 5 to the bottom surface 7 and has a first, a second, a third groove portion 41, 42, 43 and a connection portion 45 continuously connecting the first to third groove portions 41, 42, 43 with one another. The first to third groove portions 41, 42, 43 are formed as respective end portions of the groove structure 40 and have a rounded shape, e.g. like a droplet. The groove structure is formed as a bifurcating or branching structure in which each of the first to third groove portions 41, 42, 43 is connected to each other by the connection portion 45 interposed therebetween. In the case of forming the tool cartridge via additive manufacturing (e.g. 3D printing), the groove structure can be formed together with the tool cartridge 1. Otherwise, the groove structure 40 can be formed by subtractive manufacturing, e.g. spark erosion or water or laser cutting.

The groove structure 40 is located in an area of the tool cartridge 1, when seen in the longitudinal direction, between the attachment recess 23 and the end surface 17 (i.e. in the front portion) and, when seen in the cross direction, between the second side surface 15 and the insert pocket 19 on the second side 12 and the first side surface 13 on the first side 11. That is, the tool cartridge 1 is fixed to the holder at the rear portion, i.e. the area of the attachment recess 23 to the second end, an at the front portion the groove structure 40 is provided.

In a plan view of the top surface 5, like in Fig. 6, the first groove portion 41 is located, when seen in longitudinal direction, between the end surface 17 and the third constraining surface 19c of the insert pocket 19, and is located closer to the end surface 17 than to the third constraining surface 19c, e.g. at about 20% to about 30% of the distance in the longitudinal direction from the end surface 17 to the third constraining surface 19c. Further, the first groove portion 41 is located, when seen in cross direction, between the first side surface 13 and the insert pocket 19 (second constraining surface 19b), and is located closer to the insert pocket 19 than the first side surface 13, e.g. at about 30% to about 50% of the distance in the cross direction from the second constraining surface 19b to the first side surface 13.

Further, an elastically deformable first land portion 51 having reduced stiffness compared to adjacent portions of the tool cartridge 1 is formed between the end surface 17 and the first groove portion 41. By the rounded shape of the first groove portion 41, e.g. radius of curvature, and position of the first groove portion 41, the elasticity of the first land portion 51 can be adjusted, e.g. considering material properties and stress distribution.

In the plan view of the top surface 5, the second groove portion 42 is located, when seen in longitudinal direction, between the insert pocket 19 (third constraining surface 19c) and the second end 3b, and is located closer to the attachment recess 23 than to the insert pocket 19, e.g. at about 60% to about 80% of the distance in the longitudinal direction from the third constraining surface 19c to the attachment recess 23. Further, the second groove portion 42 is located, when seen in cross direction, between the second side surface 15 and the second constraining surface 19b of the insert pocket 19, e.g. in the middle therebetween, i.e. in the cross direction at about 40% to about 60% of the distance from the second side surface 15 to the second constraining surface 19b.

A side recess 47 is formed in the second side surface 15 so as to be recessed in said second side surface 15 towards the second groove portion 42. In the plan view of the top surface 5, the side recess 47 has a semicircular shape and extends from the top surface 5 to the bottom surface 7. A second land portion 52 having reduced stiffness compared to the adjacent portions of the tool cartridge 1 is formed between the side recess 47 and the second groove portion 42. By adjusting the position and radius of curvature of the side recess 47, i.e. length in longitudinal direction and length in cross direction, the elasticity of the second land portion 52 can be adjusted, e.g. considering material properties and stress distribution, e.g. also considering the rounded shape of the second groove portion 42, e.g. radius of curvature, and the position of the second groove portion 42. Further, by providing the side recess 47, it is possible that the groove structure 40 extends to the bottom surface 7 and does not open in the inclined second side surface 15, thereby providing a tool cartridge 1 stably supported in the holder. The side recess 47 is optional. In case of no side recess 47, the second land portion 52 is formed between the second side surface 15 and the second groove portion 42.

In the plan view of the top surface 5, the third groove portion 43 is located, when seen in longitudinal direction, between the insert pocket 19 (third constraining surface 19c) and the attachment recess 23, and is located closer to the attachment recess 23 than the second groove portion 42, e.g. in longitudinal direction at about 80% to about 100% of the distance in the longitudinal direction from the third constraining surface 19c to the attachment recess 23. Further, the third groove portion 43 is located, when seen in cross direction, closer to the first side surface 13 than the first groove portion 41, e.g. in the middle therebetween, i.e. in cross direction at about 40% to about 60% of the distance from the first groove portion 41 to the first side surface 13.

Further an elastically deformable third land portion 53 having reduced stiffness compared to the adjacent portions of the tool cartridge 1 is formed between the first side surface 13 and the third groove portion 43. By the rounded shape of the third groove portion 43, e.g. radius of curvature, and position of the third groove portion 43 the elasticity of the third land portion 53 can be adjusted, e.g. considering material properties and stress distribution.

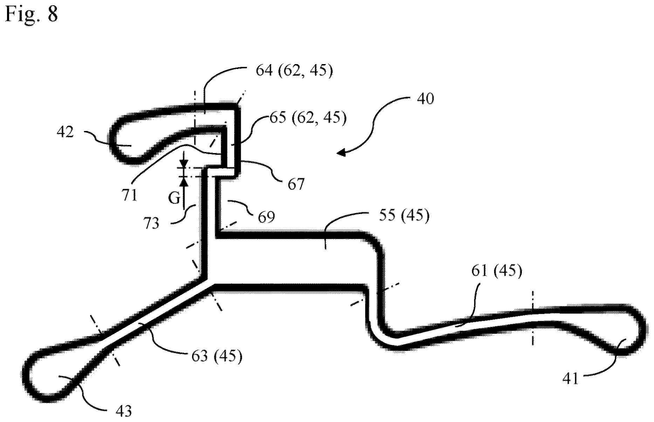

As can be seen in e.g. Fig. 8, the connection portion 45 of the groove structure 40 includes a central section 55, a first branch 61, a second branch 62 and a third branch 63. In the plan view of the top surface 5, a center of the central section 55 is located, when seen in longitudinal direction, in the middle between the first and third groove sections 41, 43, i.e. at about 40% to about 70% of a distance from the first groove section 41 to the third groove section 43, and, when viewed in cross direction, in the middle between the second and third groove sections 42, 43, i.e. at about 40% to about 60% of a distance from the second groove section 42 to third groove section 43. Further, the central section 55 has a rectangular shape extending in longitudinal direction with a length greater than a width in cross direction, e.g. the length of the central section 55 is about three times to five times its width.

Each of the branches 61, 62, 63 is, at one end, connected to the central section 55 and extends away from the central section 55 and is, at the other end, connected to the first, second and third groove portions 41, 42, 43, respectively. Each of the branches 61, 62, 63 has e.g. the same width (distance of opposing walls defining the groove) which is less than the width of the central section 55 e.g. about 1/5 to 1/10 of the width of the central section 55. Further, the first, second and third groove portions 41, 42, 43 (end portions) having the rounded shape have a width narrowing down as going towards the respective branches 61, 62, 63, i.e. have a maximum width of two to five times of the width of the branches 61, 62, 63.

Further, the first to third branches 61, 62, 63 extend from three of four corners of the central section 55: The first branch 61 extends from a corner located closest to the first side surface 13 and the end surface 17, the second branch 62 extends from the corner located closest to the second side surface 15 and second end 3b, and the third branch 63 extends from the corner located closest to the first side surface 13 and second end 3b.

The first branch 61 extends from the first groove portion 41 to the central section 55 in a curved shape, curving towards the first side 11 and back away from the first side 11 (towards the second side 12) as going from the first groove portion 41 towards the central section 55. The section of the first branch 61 curving away from the first side 11 is located, when seen in the longitudinal direction), away from the third constraining surface 19c of the insert pocket 19 (see e.g. Fig. 6). Thereby, sufficient material can be provided between the first branch 61, the insert pocket 19 and the central section 55, making the area therebetween stiff and less prone to deformation and/or cracks.

The second branch 62 has a first leg 64 connected to the second groove portion 42 and has a second leg 65 connected to the first leg 64 and the central section 55. The first leg 64 extends from the second groove portion 42 towards the first end 3a, e.g. parallel to the longitudinal axis X, and the second leg 65 extends from the first leg 64 towards the first side 12. An angle between the first leg 64 and the second leg 65 is about 90°.The second leg 65 extends e.g. perpendicular to the longitudinal axis X, and in a first wall 67 of the second leg 65 located on a side of the first end 3a an end stop protrusion 69 protruding towards the second end 3b is formed. Correspondingly, in an opposing second wall 71 of the second leg 65 located at the side of the second end 3b, an end stop recess 73 is formed in a shape corresponding to the end stop protrusion 69 so that in the direction perpendicular to the longitudinal axis X a gap G is formed between the end stop protrusion 69 and the end stop recess 73. That is, when going along the second leg 65 starting at the first leg 64 and going to the central section 55, a step is formed in the second leg 65 by the end stop protrusion 69 and the end stop recess 73. In case of deformation of the tool cartridge 1 in the cross direction, e.g. biasing the insert pocket 19 to the second side 12, the step functions as a mechanical stop limiting (end stop protrusion 69 and the end stop recess 73 contacting each other) further deformation of the tool cartridge 1. Thereby, sufficient material can be provided between the second branch 62, the insert pocket 19 and the central section 55, making the area therebetween stiff and less prone to deformation and/or cracks.

The third branch 63 extends from the third groove portion 43 to the central section 55 along a straight line, thereby inducing less stress to the surrounding material, e.g. as compared to having sharp turns.

The above described groove structure 40 provides the effect of locally adjusting the stiffness of the tool cartridge 1 so as to form two virtual hinges (a "material joint", the first and third land portions 51, 53) around which the insert pocket 19 can carry out a pivotal movement. Further, by the second land portion 52 (between side recess 47 and second groove portion 42) additional stiffness is provided at the second side 12 while, at the same time, allowing elastic deformation of the tool cartridge 1. With the exception of the first, second and third land portions 51, 52, 53, the remaining tool cartridge 1 is not subjected to any significant deformation when the first, second and third land portions 51, 52, 53 are elastically deformed. There is a high degree of design freedom of the tool cartridge 1 if the first, second and third land portions 51, 52, 53 are manufactured using an additive manufacturing process, e.g. 3D printing (e.g. via powder bed fusion, e.g. selective laser melting, direct metal laser sintering, electron beam melting, etc.), optionally with a sintered metal (e.g. green body via binder jetting and subsequent sintering and/or liquid metal infusion), so that the flexibility (stiffness) in the first, second and third land portions 51, 52, 53 can be adjusted, e.g. by adjusting density of the material or microstructure like pores in the material.

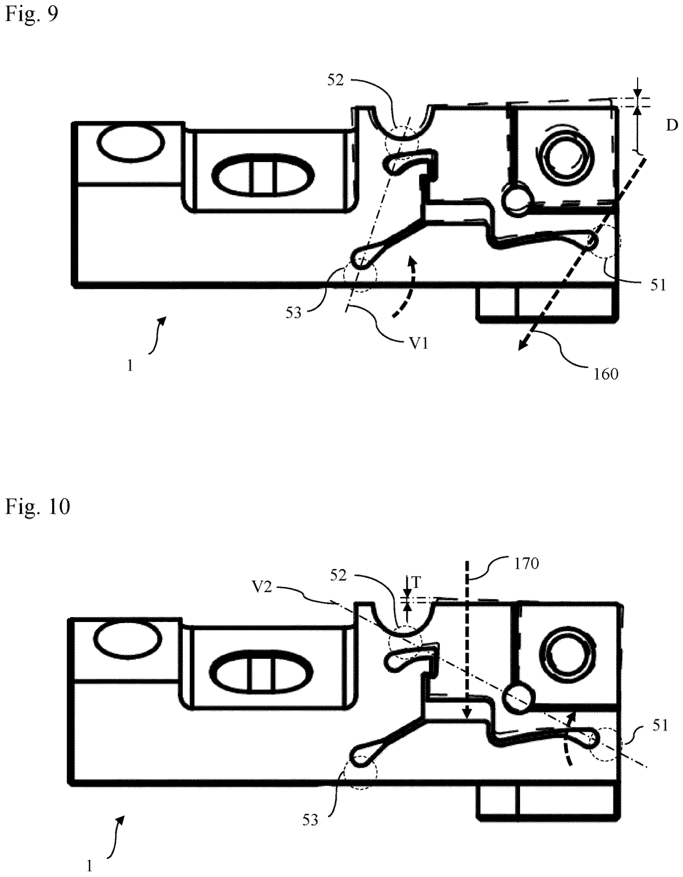

By use of adjustment means (described further below), as can be seen in Figs. 9 and 10, a front portion of the tool cartridge 1 (e.g. located closer to the first end 3a than the attachment recess 23) and including the insert pocket 19 can be biased towards the second side 12 by locally elastically deforming the tool cartridge 1. That is, as can be seen in Fig. 9, a portion located on the side of the first end 3a with respect to a first imaginary line V1 passing through the second land portion 52 and the third land portion 53 can be pivoted around the third land portion 53 as a hinge point (see arrow indicating pivoting direction), and as can be seen in Fig. 10, a portion located on the side of the first end 3a and the second side 12 with respect to a second imaginary line V2 passing through the first land portion 51 and the second land portion 52 can be pivoted around the first land portion 51 as a hinge point (see arrow indicating pivoting direction). Thereby, the groove structure 40 provides local elasticity in the tool cartridge 1 so that two different pivotal movements can be carried out by the front portion of the tool cartridge 1 in a plane parallel to the top surface 5 while the rear portion of the tool cartridge 1 is fixed to the holder. That is, by the configuration of the second land portion 52 and the third land portion 53, the front portion of the tool cartridge 1 (portion located on the side of the first end 3a with respect to the first imaginary line V1) moves integrally without much deformation. Here, the first land portion 51 provides a stable connection between the first and second sides 11, 12 of the tool cartridge 1 during movement around the third land portion 53. Thus, adjustability of the insert pocket 19 is provided while at the same time a stable tool cartridge 1 is provided. Further, by the configuration of the first land portion 51 and the second land portion 52, only the portion of the tool cartridge 1 located at the first end 3a and the second side 12 (portion located on the side of the first end 3a and the second side 12 with respect to the second imaginary line V2), moves integrally without much deformation. Thus, adjustability of the insert pocket 19 is provided while at the same time a stable tool cartridge 1 is provided.

For biasing the insert pocket 19 towards the second side 12, the tool cartridge 1 is provided with a first adjustment means and a second adjustment means. Although said adjustment means are described in the first embodiment as embodied by a screw and a through hole, said adjustment means can be embodied as any means capable of providing a biasing force towards the second side 12, e.g., wedges, i.e. in case of pivoting around the first land portion 51 a wedge pushed and locked into the central section 55 of the connection portion 45 of the groove structure 40 thereby pushing the insert pocket 19 away from the first side 11.

As can be seen in e.g. Figs. 1, 3, 5 and 7, the first adjustment means comprises a first through hole 81 starting in the end surface 17 and extending into the first side surface 13, i.e. parallel to the top surface 5 and below the insert pocket 19. That is, a first hole axis X1 extends with an acute angle in the range of about 45° to about 60° formed between the first hole axis X1 and the longitudinal axis X and intersects the first groove portion 41. In the plan view of the top surface 5, the first hole axis X1 is spaced away from an intersection of the end surface 17 and the second side surface 15 with a distance of more than a bore radius of the first through hole 81. At the first end 3a, a first access pocket 83 is formed in the end surface 17 having a flat bottom surface 85 perpendicular to the first hole axis 81. The first access pocket 83 is recessed along the first screw axis X1 with a larger dimension than the bore of the first through hole 81. This allows good accessibility from the second side 12 and the first end 3a to the first screw hole 81 while at the same time keeps enough material below the corner of the insert pocket 19, i.e. a corner receiving most of the cutting force during cutting.

An inner thread is formed in a section of the first through hole 81 located between the first groove portion 41 and the first side 11. In the present case, the first through hole 81 extends further into and through the (optional) positioning protrusion 29, thereby providing a greater length for the inner thread to be formed in the first through hole 81. The first through hole 81 is configured for engagement with an adjustment screw insertable from the side of the first end 17. At the first side 11 where the first through hole 81 exits the positioning protrusion 29, a counter bore 87 may be provided having a larger diameter than the threaded portion of the first through hole 81. Such a counter bore 87 provides a free space for the adjustment screw for leaving the threaded portion of the first through hole 81.

As can be seen in e.g. Figs. 4 and 7, the second adjustment means comprises a second through hole 92 starting in the second side surface 15 and extending parallel to the top surface 5 and into central section 55 of the connection portion 45 of the groove structure 40. The second through hole 92 has a second hole axis X2 extending perpendicular to the longitudinal axis X, and, in the plan view of the top surface 5, the second through hole 92 is located between the insert pocket 19 and the side recess 47. In the height direction, the second through hole 92 is approximately located in the middle between the top surface 5 and the bottom surface 7. By this configuration, i.e. together with the configuration of the second branch 62, the second through hole 92 is located in sufficient material of the tool cartridge 1 without reducing stiffness too much. The second through hole 92 has an inner thread formed therein and is configured for engagement with an adjustment screw. An indentation may be formed in a wall of the central section 55 located on the first side 11 so that a tip of the adjustment screw inserted into the second through hole 92 can be seated therein.

### First embodiment - Cutting tool

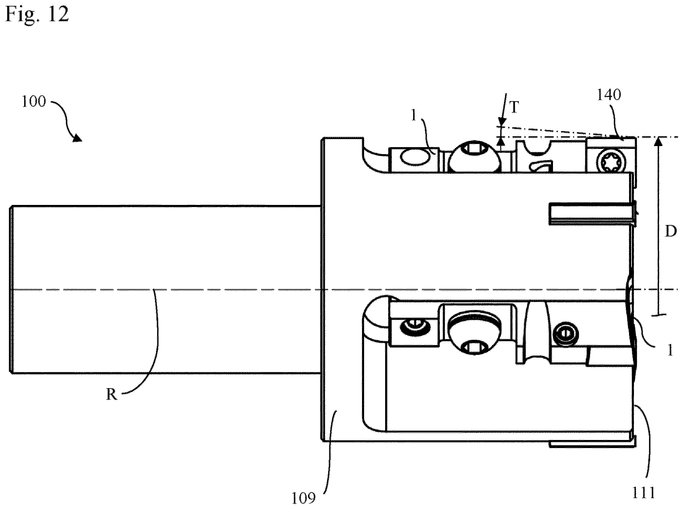

Now referring to Figs. 11 and 12, a drill as an exemplary cutting tool 100 according to the first embodiment of the present disclosure is described. The cutting tool 100 may be used for drilling up an already existing hole, but may also be configured for full drilling or reaming.

The cutting tool 100 comprises a holder 101 having a cylindrical rod shape extending from a first end 103a to a second end 103b along a rotation axis R of the holder 101. At the second end 103b, the holder comprises a shaft 105 holdable by a chuck of a drilling machine so as to be rotatable around the rotation axis R (counter-clockwise in Fig. 11). Means and configurations of attaching a shaft to a chuck are well known to the skilled person, and a detailed description thereof is omitted. At the first end 103a, the holder 101 comprises three cartridge pockets 107 for attachment of respective tool cartridges 1. The cartridge pockets 107 open into a circumferential surface 109 (outer surface) and an end surface 111 at the first end 103a of the holder 101. Further, and optionally, the holder 101 comprises three guide pads 113 located between adjacent cartridge pockets 107 on the circumferential surface 109 so as to better guide the cutting tool 100 in the hole. The number of cartridge pockets 107 (and correspondingly the number of guide pads 113) can vary e.g. depending on the cutting diameter D of the cutting tool 100 and the material properties of the to be drilled material and may be e.g. one to five. In the following, description of one cartridge pocket 107 together with one tool cartridge 1 is given which also applies for the remaining cartridge pockets 107.

In rotation direction located in front of the cartridge pocket 107, a chip discharge groove 115 is provided which extends from the first end 103a towards the second end 103b and beyond the tool cartridge 1. The cartridge pocket 107 has a first seating surface 121 parallel to the rotation axis R and facing in the rotation direction, e.g. perpendicular to the rotation direction, of the holder 101 and has a second seating surface 122 connected to the first seating surface 121 and facing in a radially outward direction of the holder 101. When the tool cartridge 1 is accommodated in the cartridge pocket 107, the bottom surface 7 of the tool cartridge 1 is seated on the first seating surface 121 of the cartridge pocket 107 and the first side surface 13 of the tool cartridge 1 is seated on the second seating surface 122 of the cartridge pocket 107. In the second seating surface 122 attachment means for the tool cartridge 1 are provided, i.e. an attachment screw hole corresponding to the tool cartridge screw hole 25, a reception hole for the eccentric screw 27, and a pocket for accommodating the positioning protrusion 29. When the tool cartridge 1 is seated in the cartridge pocket 107, the axial position, i.e. along the rotation axis R, of the tool cartridge 1 is adjustable by the eccentric screw 27 and fixable by a cartridge attachment screw 130 inserted into the tool cartridge screw hole 25 and screwed into the attachment screw hole of the holder 101. A cutting insert 140 is accommodated in the insert pocket 19 of the tool cartridge 1 so that the cutting insert 140 protrudes towards the second side 12 and the first end 3a of the tool cartridge 1, i.e., outward of the tool cartridge 1. A guide pad 113 corresponding to the tool cartridge 1 may be located on the opposite side of a corresponding cutting insert 140 at the holder 101 so as to allow easy measurement of the cutting diameter D of the cutting tool 100 (distance between the outer edge of the cutting insert 140 and the guide pad 113). The cutting insert 140 is attached at the tool cartridge 1 by an insert screw 150 screwed through a cutting insert screw hole of the cutting insert 140 and into a corresponding insert screw hole 21 located in the first constraining surface 19a of the insert pocket 19. Alternative means for fixing the cutting insert 140 in the insert pocket 19 are clamping, brazing, gluing, etc. As can be seen in Fig. 12, the cutting insert 140 protrudes radially outward of the circumferential surface 109 of the holder 101 thereby defining the cutting diameter D and the taper T of the cutting tool 100 and protrudes along the rotation axis R outward of the end surface o111 of the holder 101.

The cutting tool 100 further comprises a first adjustment screw 160 (e.g. a grub screw) in engagement with the inner thread of the first through hole 81, wherein a tip of the first adjustment screw 160 protrudes from the first side surface 13 (positioning protrusion 29) radially inwards towards the rotation axis R and abuts on the second seating surface 122 (pocket) of the cartridge pocket 107 (see e.g. Fig. 9). The cutting tool 100 further comprises second adjustment screw 170 (e.g. grub screw) in engagement with the inner thread of the second through hole 92, wherein a tip of the second adjustment screw 170 protrudes into the central section 55 of the connection portion 45 of the groove structure 40 and abuts on a wall of central section 55 located on the first side 11 (see e.g. Fig. 10).

As can be seen in e.g. Figs. 9 and 12, the cutting insert 140 (insert pocket 19) is elastically biased radially outwards of the holder 101 with the third land portion 53 as hinge point for adjusting a cutting diameter D of the cutting tool 100 by increasing or reducing the protrusion amount of the first adjustment screw 160 from the first side surface 13, i.e. by adjusting the force transmitted from the first adjustment screw 160 abutting, as counter bearing, on the second seating surface 122 to the inner thread of the first through hole 81. As can be seen in Figs. 10 and 12, the cutting insert 140 (insert pocket 19) is elastically biased radially outwards of the holder 101 with the first land portion 51 as hinge point for adjusting a taper T of the cutting tool 100 by increasing or reducing the protrusion amount of the second adjustment screw 170 into the central section 55 of the connection portion 45 of the groove structure 40, i.e. by adjusting the force transmitted from the second adjustment screw 170 abutting, as counter bearing, on the wall of the central section 55 located on the first side 11 to the inner thread of the second through hole 92.

Because the material of the first to third land portions 51, 52, 53 is elastically deformed from an initial non-deformed state by the first and second adjustment means (in the non-limiting example first through hole 81 and first adjustment screw 160 as well as second through hole 92 and second adjustment screw 170), a restoring force back into their non-deformed state results. Thus, the position of the cutting insert 140 can be locked by the first and second adjustment means thereby ensuring play-free adjustability of both of cutting radius and taper in the micrometer range and simultaneously the cutting insert 140 is stabilized so that the cutting forces are stably transferred via the tool cartridge 1 to the holder 101.

Steel, cast iron, or the like may be used as a material of the holder 101. Examples of a material of the cutting insert 140 may include cemented carbide and cermet. A surface of the cutting insert 140 may be coated with a coating film using a chemical vapor deposition (CVD) method or a physical vapor deposition (PVD) method. Examples of the composition of the coating film may include titanium carbide (TiC), titanium nitride (TiN), titanium carbonitride (TiCN), alumina (Al₂O₃) and diamond.

### Second embodiment - Tool cartridge

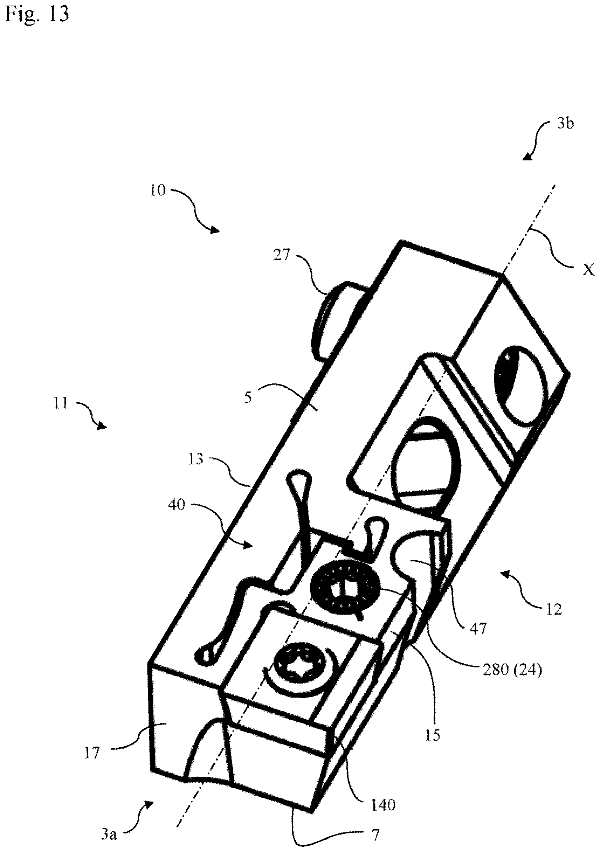

Referring to Figs. 13 to 15, a second embodiment of a tool cartridge 10 is described. For the sake of conciseness, only features distinguishing over the features of the tool cartridge 1 of the first embodiment are described in the following. The tool cartridge 10 of the second embodiment distinguishes over the tool cartridge 1 of the first embodiment by another configuration of the first adjustment means and the second adjustment means.

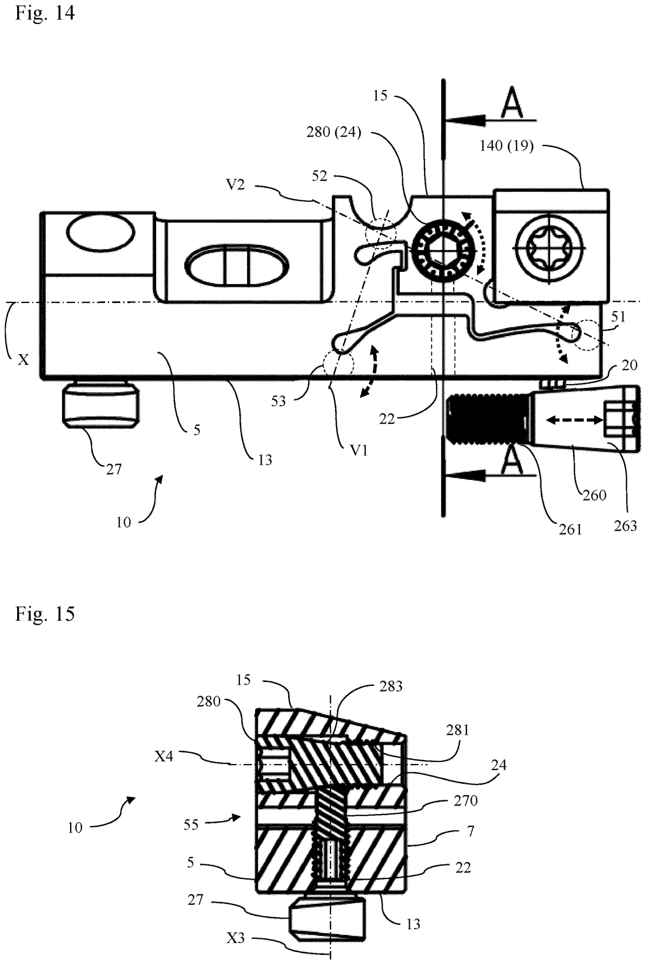

As can be seen in Fig. 14, the first adjustment means comprises an adjustment protrusion 20 protruding from the first side surface 13. In the height direction of the tool cartridge 10, the adjustment protrusion 20 is located at about the middle between the top surface 5 and the bottom surface 7. Further, in a plan view of the top surface 5, the adjustment protrusion 20 is located, when seen along the longitudinal direction, between the end surface 17 and the third constraining surface 19c of the insert pocket 19. Preferably, the adjustment protrusion 20 is located, when seen in the longitudinal direction, at the first groove portion 41. The adjustment protrusion 20 has a flat, e.g. inclined away from the first side surface 13 as going towards the second end 3b, or rounded head and serves for contacting a conical adjustment screw of the holder (described later).

Referring to Figs. 14 and 15, it can be seen that the second adjustment means comprises a horizontal screw hole 22 starting in the first side surface 13 and extending through the central section 55 of the groove structure 40 towards the second side 12. The horizontal screw hole 22 has a horizontal screw hole axis X3 located, in the height direction, approximately at the middle between the top surface 5 and the bottom surface 7 and extends perpendicular to the longitudinal axis X and parallel to the top surface 5. In the present embodiment the horizontal screw hole 22 ends in a portion of the tool cartridge 10 between the central section 55 and the second side surface 15, but alternatively may be a through hole opening into the second side surface 15. The horizontal screw hole 22 has an inner thread formed between the first side surface 13 and the central section 55 and is configured for engagement with an abutment screw (e.g. grub screw) insertable from the first side 11 and protruding through the central section 55 of the groove structure 40 when screwed into the inner thread of the horizontal screw hole 22.

Further, the second adjustment means comprises a vertical screw hole 24 starting in the top surface 5 and extending towards the bottom surface 7, in the present embodiment opening into the bottom surface 7. The vertical screw hole 24 has a vertical screw hole axis X4 extending perpendicular to the horizontal screw hole axis X3 of the horizontal screw hole 22 and intersects said horizontal screw hole axis X3 in an area located, when seen in the longitudinal direction, approximately in the middle between the third constraining surface 19c of the insert pocket 19 and the second leg 65 of the second branch 62, i.e. at about 40% to about 60% of the distance starting at third constraining surface 19c to the second leg 65, and, when seen in the cross direction, approximately in the middle between the second side surface 15 and the central section 55, i.e. at about 40% to about 60% of the distance starting at second side surface 15 to the central section 55. The vertical screw hole 24 has an inner thread formed in a portion between the intersection of the horizonal and vertical screw hole axes X3, X4 and the bottom surface 7, preferably at about 70% to 100% of the distance starting at the top surface 5 to the bottom surface 7. Further, the vertical screw hole 24 has a portion with larger diameter (conical head accommodation oprtion), i.e. larger diameter than the portion formed with the thread, located between the portion formed with the thread and the top surface 5. The vertical screw hole 24 serves for engagement with a conical adjustment screw insertable from the top surface 5 (described later).

### Second embodiment - Cutting tool

Now referring to Figs. 14, 15 and 16, a drill as an exemplary cutting tool 200 according to the second embodiment of the present disclosure and carrying the tool cartridge 10 is described. Like for the cartridge 10 of the second embodiment, only the distinguishing features of the cutting tool 200 of the second embodiment will be described in the following.

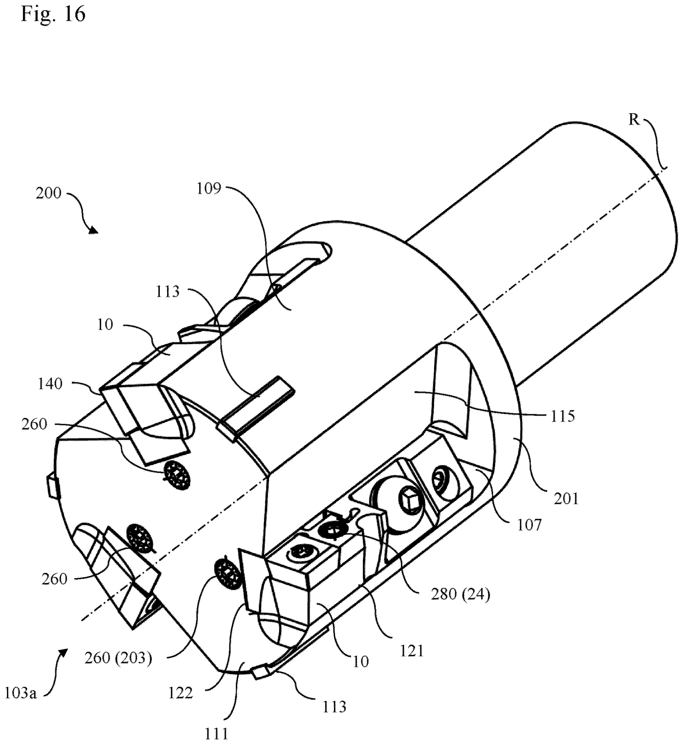

As can be seen in Fig. 16, the cutting tool 200 according to the second embodiment distinguishes over the cutting tool 100 of the first embodiment in that a reception screw hole 203 is formed in the end surface 111 (instead of the pocket for accommodating the positioning protrusion 29 of the cutting tool 100 of the first embodiment) radially inwards of and adjacent to the second seating surface 122 of the holder 201. The reception screw hole 203 extends parallel to the rotation axis R of the holder 201 and has an opening (e.g. formed by a cross-bore or slot) formed in its inner circumferential wall and connecting to the second seating surface 122. In size and position, the opening corresponds to the adjustment protrusion 20 of the tool cartridge 10. That is, when the tool cartridge 10 is accommodated in the cartridge pocket 107, the adjustment protrusion 20 is seated in the opening of the reception screw hole 203 and a tip of the adjustment protrusion 20 protrudes into the reception screw hole 203.

The cutting tool 200 further comprises a first conical screw 260 inserted into the reception screw hole 203. As can be seen in Fig. 14, the first conical screw 260 has a threaded portion 261 engaging with a corresponding thread of the reception screw hole 203 and has conical head 263 contacting the adjustment protrusion 20 when screwed into the reception screw hole 203. The conical head 263 widens as going away from the threaded portion 261, e.g. linearly or in a curved shape. The insert pocket 19 of the tool cartridge 200 is elastically biased radially outwards of the holder 201 for adjusting a cutting diameter D of the cutting tool 200 by increasing or reducing an amount by which the first conical screw 260 is screwed into the reception screw hole 203. When the tool cartridge 10 is fixed at the holder 201, a portion of the tool cartridge 10 located on the side of the first end 3a with respect to the first imaginary line V1 passing through the second land portion 52 and the third land portion 53 can be pivoted around the third land portion 53 as a hinge point by screwing the first conical screw 260 into the reception screw hole 203 so that the conical head 263 contacts the adjustment protrusion 20, thereby exerting a biasing (pushing) force on the adjustment protrusion 20 (see dashed arrow indicating pivoting direction and dashed arrow indicating linear movement of the first conical screw). Thread pitch of the threaded portion 261 and cone angle of the conical head 263 define a gear ratio of the first adjustment means and can be selected according to the required accuracy of diameter adjustment. Correspondingly, a more accurate adjustment of the cutting diameter D of the cutting tool 200 can be carried out using the first conical screw 260. Further, the first conical screw 260 is easily accessible from the first end 103a of the holder 201. A marker, e.g. a gash in the end surface 111, may be provided adjacent to the reception screw hole 203 so that a turning amount of the first conical screw 260 relative to the marker can be recognized during adjustment of the cutting diameter D, thereby enhancing recognition of the already made adjustment.

As can be seen in Figs. 14 and 15, the cutting tool 200 (or the tool cartridge 10) further comprises an abutment screw 270 inserted into the horizontal screw hole 22 and a second conical screw 280 inserted into the vertical screw hole 24. The abutment screw 270 has a tip protruding into the vertical screw hole 24, i.e. when the abutment screw 270 is fully screwed into the horizontal screw hole 22 (the abutment screw 270 does not protrude from the first side surface 13) has a length of its threaded portion extending into the central section 55 but not further beyond the central section 55 and has its tip located in the portion with larger diameter of the vertical screw hole 24. The second conical screw 280 has a configuration analogous to that of the first conical screw 260, i.e., has a conical head 283 and a threaded portion 281.

As can be seen in Fig. 15, when screwed into the vertical screw hole 24, the second conical screw 280 has its threaded portion 281 engaging with the corresponding thread of the vertical screw hole 24 and has its conical head 283 contacting the tip of the abutment screw 270. The insert pocket 19 of the tool cartridge 200 is elastically biased radially outwards of the holder 201 for adjusting a taper T of the cutting tool 200 by increasing or reducing an amount by which the second conical screw 280 is screwed into the vertical screw hole 24. A portion of the tool cartridge 10 located on the side of the first end 3a and the second side 12 with respect to the second imaginary line V2 passing through the first land portion 51 and the second land portion 52 can be pivoted around the first land portion 51 as a hinge point by screwing the second conical screw 280 into the vertical screw hole 24 so that the conical head 283 contacts the tip of the abutment screw 270, thereby exerting a pushing force on the abutment screw 270 serving as a counter-bearing (see dotted arrow indicating pivoting direction and dotted arrow indicating rotation of the second conical screw). In the second adjustment means, thread pitch of the threaded portion 281 and cone angle of the conical head 283 define a gear ratio and can be selected according to the required accuracy of taper adjustment. Correspondingly, a more accurate adjustment of the taper T of the cutting tool 200 can be carried out using the second conical screw 280. Further, the second conical screw 280 is easily accessible from the circumferential surface 109 of the holder 201 via the chip discharge groove 115. A marker, e.g. a gash in the top surface 5, may be provided adjacent to the vertical screw hole 24 so that a turning amount of the second conical screw 280 relative to the marker can be recognized during adjustment of the taper T, thereby enhancing recognition of the already made adjustment.

### Method of adjusting a cutting tool

A method for adjusting the above described cutting tools 100, 200, i.e. cutting diameter D and taper T of the cutting tools 100, 200, comprises: In a state in which the tool cartridge 1, 10 has the cutting insert 140 fixed thereon (in the insert pocket 19) and in which the tool cartridge 1, 10 is fixed to the holder 101, 201 (in the cartridge pocket 107) and in which an axial position of the tool cartridge 1, 10 in the holder 101, 201 has already been adjusted by use of the eccentric screw 27 the following steps are carried out:

Measuring a first distance between the rotation axis R of the holder 101, 201 and a first radially outer corner (e.g. cutting corner) of the cutting insert 140, said outer corner located closest to the first end 103a of the holder 101, 201. The first distance can be determined by e.g. measuring a distance between said cutting corner of the cutting insert 140 and an opposing guide pad 113 and dividing the result by 2. Such a measurement can be carried out manually, e.g. using a sliding caliper, or automatically, e.g. using a contacting probe of e.g. a tool machine.

Increasing or reducing the first distance by increasing or reducing a radially outward biasing force of the first adjustment means so that the resulting pivoting movement of the cutting insert 140 around the third land portion 53 (hinge point) corresponds to the difference between the first distance and the cutting diameter D of the cutting tool 100, 200. According to the first embodiment, said increasing or reducing can be carried out using a screw driver. By turning the first adjustment screw 160 with a predefined amount, e.g. a quarter turn, a predefined increase or reduction of the first distance is achieved. The relation of the predefined amount of turning and the predefined increase or reduction of the first distance can be determined in advance, e.g. by tests. Thus, the cutting diameter D of the cutting tool 100 is adjusted. In a similar manner said increasing or reducing according to the second embodiment can be carried out by turning the first conical screw 260. In case of using the marker, a scale relating the turning amount of the first conical screw 260 to an increase/reduction of diameter D, can be provided so that the person adjusting the cutting diameter D of the cutting tool 200 can carry out the adjustment with more accuracy.

Measuring a second distance between the rotation axis R of the holder 101, 201 and a second radially outer corner of the cutting insert 140, wherein said outer corner is located further away from the first end 103a of the holder 101, 201 than the first corner. Measuring the second distance can be carried out in the same manner as measuring the first distance.

Increasing or reducing the second distance by increasing or reducing a radially outward biasing force of the second adjustment means so that the resulting pivoting movement of the cutting insert 140 around the first land portion 51 (hinge point) corresponds to the difference between the second distance and the cutting diameter D of the cutting tool 100, 200. According to the first and second embodiment, increasing or reducing the second distance can be carried out in the same manner as increasing or reducing the first distance, i.e. using the 170 second adjustment screw 170 in case of the first embodiment and using the second conical screw 280 in the case of the second embodiment. Thus, the taper T of the cutting tool 100, 200 is adjusted, e.g. in case that the first and second distances are equal to the cutting diameter D, the cutting tool 100, 200 has no taper, or e.g. in the case that the second distance is greater than the cutting diameter D, the cutting tool 100, 200 has a back taper.

Although for the sake of description adjusting the first distance has been described as adjusting the cutting diameter D (only) and adjusting the second distance has been described as adjusting the taper T (only), it is clear that the cutting diameter D and the taper T may be correlated with one another, i.e. adjusting one might at the same time adjust (change) the other. Thus, adjusting the cutting diameter D and the taper T might require iterative steps of measuring and adjusting. Nevertheless, as can be seen in e.g. Figs. 9 and 10, adjusting the taper T might affect the cutting diameter D to a lesser extent, i.e. almost neglectable extent. In the case of the second embodiment, by selecting the gear ratio of the thread and conical head of the first and second conical screws, cross-influence of adjusting cutting diameter D and taper T can be further reduced. That is, the forgoing steps can be repeatedly carried out multiple times until the desired adjustment of the cutting insert 140 in the cutting tool 100, 200 is achieved. It is e.g. possible to carry out adjustment of the first or the second distances (and subsequent measurement) in distinct steps until desired adjustment of the respective distance has been achieved before measuring and adjusting the other distance. That is, the above described steps can be carried out in another than the stated order, and one step can be carried out multiple times before carrying out the subsequent step.

### LIST OF REFERENCE SIGNS

### First embodiment

| | | | |
|---|---|---|---|
| 1 | tool cartridge | 3a | first end |
| 3b | second end | 5 | top surface |
| 7 | bottom surface | 11 | first side |
| 12 | second side | 13 | first side surface |
| 15 | second side surface | 17 | end surface |
| 19 | insert pocket | 19a, b, c | first to third constraining surfaces |
| 21 | insert screw hole | 23 | attachment recess |
| 25 | tool cartridge screw hole | 27 | eccentric screw |
| 29 | positioning protrusion | 40 | groove structure |
| 41 | first groove portion (groove structure) | 42 | second groove portion (groove structure) |
| 43 | third groove portion (groove) structure | 45 | connection portion (groove structure) |
| 47 | side recess | 51 | first land portion |
| 52 | second land portion | 53 | third land portion |
| 55 | central section (connection portion) | 61 | first branch (connection portion) |
| 62 | second branch (connection portion) | 63 | third branch (connection portion) |
| 64 | first leg (second branch) | 65 | second leg (second branch) |
| 67 | first wall (second leg) | 69 | end stop protrusion (second leg) |
| 71 | second wall (second leg) | 73 | end stop recess (second leg) |
| 81 | first through hole | 83 | first access pocket |
| 85 | bottom surface (first access pocket) | 87 | counter bore (first through hole) |
| 92 | second through hole | 100 | cutting tool |
| 101 | holder | 103a | first end |
| 103b | second end | 105 | shaft |
| 107 | cartridge pocket | 109 | circumferential surface |
| 111 | end surface | 113 | guide pad |
| 115 | chip discharge groove | 121 | first seating surface |
| 122 | second seating surface | 130 | cartridge attachment screw |
| 140 | cutting insert | 150 | insert screw |
| 160 | first adjustment screw | 170 | second adjustment screw |

### Second embodiment

| | | | |
|---|---|---|---|
| 10 | tool cartridge (second embodiment) | 20 | adjustment protrusion |
| 22 | horizontal screw hole | 24 | vertical screw hole |
| 200 | cutting tool | 201 | holder |
| 203 | reception screw hole | 260 | first conical screw |
| 261 | threaded portion | 263 | conical head |
| 270 | abutment screw | 280 | second conical screw |
| 281 | threaded portion | 283 | conical head |
| D | cutting diameter | G | gap |
| R | rotation axis of the holder | T | taper |
| V1 | first imaginary line | V2 | second imaginary line |
| X | longitudinal axis of the tool cartridge | X1 | first hole axis |
| X2 | second hole axis | X3 | horizontal screw hole axis |
| X4 | vertical screw hole axis | | |

## Claims

1. A tool cartridge (1;10) for a cutting tool (100), the tool cartridge (1) having a first end (3a) and a second end (3b), a longitudinal axis (X) extending there between, a first side (11), and a second side (12) opposite to the first side (11) with the longitudinal axis (X) located there between, the tool cartridge (1) comprising:
a top surface (5) extending from the first end (3a) towards the second end (3b),
a bottom surface (7) opposite to the top surface (5),
a first side surface (13) extending along the first side (11) and a second side surface (15) extending along the second side (12),
an end surface (17) located at the first end (3a) and extending between the first and the second side surface (13, 15),
an insert pocket (19) configured for accommodation of a cutting insert (140), wherein the insert pocket (19) is recessed in the top surface (5) and opens into the second side surface (15) and the end surface (17),
a groove structure (40) recessed from the top surface (5) to the bottom surface (7) and having a first, a second, a third groove portion (41, 42, 42) and a connection portion (45), the first to third groove portions (41, 42, 42) being continuously connected by the connection portion (45) of the groove structure (40), wherein, in a plan view of the top surface (5),
the first groove portion (41) is located, when seen along the longitudinal axis (X), between the end surface (17) and an end of the insert pocket (19) facing the second end (3b) and is located, when seen in a cross direction of the longitudinal axis (X), between the first side surface (13) and the insert pocket (19), and wherein an elastically deformable first land portion (51) is formed between the end surface (17) and the first groove portion (41),
the second groove portion (42) is located, when seen along the longitudinal axis (X), between the insert pocket (19) and the second end (3b) and is located, when seen in a cross direction of the longitudinal axis (X), between the second side surface (15) and an end of the insert pocket (19) facing the first side (11), and wherein an elastically deformable second land portion (52) is formed between the second side surface (15) and the second groove portion (42), and
the third groove portion (43) is located, when seen along the longitudinal axis (X), between the insert pocket (19) and the second end (3b) and is located, when seen in a cross direction of the longitudinal axis (X), closer to the first side surface (13) than the first groove portion (41), and wherein an elastically deformable third land portion (53) is formed between the first side surface (13) and the third groove portion (43),
a first adjustment means configured for pivoting the insert pocket (19) with the third land portion (53) as hinge point by elastically biasing the insert pocket (19) towards the second side (12), and
a second adjustment means configured for pivoting the insert pocket (19) with the first land portion (51) as hinge point by elastically biasing the insert pocket (19) towards the second side (12).

2. The tool cartridge (1; 10) according to claim 1, wherein the connection portion (45) of the groove structure (40) includes a central section (55), a first branch (61), a second branch (62) and a third branch (63), wherein each of the branches (61, 62, 63), at one end, is connected to the central section (55) and extends away from the central section (55) and, at the other end, is connected to the first, second and third groove portion (41, 42, 43), respectively.

3. The tool cartridge (1; 10) according to claim 2, wherein, in the plan view of the top surface (5), the central section (55) is located in a triangle formed by lines connecting the first to third land portions (51, 52, 53) as corners of the triangle, optionally, wherein the central section (55) is located, when viewed along the longitudinal axis (X), in the middle between the first and third groove section (41, 43), and, when viewed in the cross direction, in the middle between the second and third groove section (42, 43).

4. The tool cartridge (1; 10) according to claim 2 or 3, wherein in the plan view of the top surface (5), the central section (55) has a quadrangular shape extending with a larger length along the longitudinal axis (X) than along a cross direction of the longitudinal axis (X), wherein in the cross direction of the longitudinal axis (X), a width of the central section (55) is larger than a width of anyone of the first to third branches (61, 62, 63), optionally, the width of the central section (55) in the cross direction of the longitudinal axis (X) is five to ten times larger than the largest width of anyone of the first to third branches (61, 62, 63).

5. The tool cartridge (1; 10) according to claim 4, wherein the first to third branches (61, 62, 63) extend from three of four corners of the central section (55), optionally, wherein the first branch (61) extends from the corner located closest to the first side surface (13) and the end surface (17), the second branch (62) extends from the corner located closest to the second side surface (15) and second end (3b), and the third branch (63) extends from the corner located closest to the first side surface (13) and second end (3b).

6. The tool cartridge (1; 10) according to anyone of the claims 2 to 5, wherein the first branch (61) extends from the first groove portion (41) to the central section (55) in a curved shape, optionally, the first branch (61) is curved towards the first side (11) and back away from the first side (11) as going from the first groove portion (41) towards the central section (55).

7. The tool cartridge (1; 10) according to anyone of the claims 2 to 6, wherein the second branch (62) has a first leg (64) connected to the second groove portion (42) and a second leg (65) connected to the first leg (64) and the central section (55), and wherein the first leg (64) extends from the second groove portion (42) towards the first end (3a) and the second leg (65) extends from the first leg (64) towards the first side (11).

8. The tool cartridge (1; 10) according to claim 7, wherein
the second leg (65) extends perpendicular to the longitudinal axis (X),
in a first wall (67) of the second leg (65) located on the side of the first end (3a), an end stop protrusion (69) protruding towards the second end (3b) is formed, and
in a second wall (71) of the second leg (65) located on the side of the second end (3b), an end stop recess (73) is formed in a shape corresponding to the end stop protrusion (69) so that in the direction perpendicular to the longitudinal axis (X) a gap (G) is formed between the end stop protrusion (69) and the end stop recess (73).

9. The tool cartridge (1) according to anyone of the preceding claims, wherein a side recess (47) is formed in the second side surface (15) so as to be recessed towards the second groove portion (42), and the second land portion (52) is defined between the side recess (47) and second groove portion (42), wherein, optionally, the side recess (47) has a length along the longitudinal axis (X) which is larger than a length of the side recess (47) in a cross direction of the longitudinal axis (X).

10. The tool cartridge (1) according to anyone of the preceding claims, wherein
the first adjustment means comprises a first through hole (81) starting in the end surface (17) or the second side surface (15) and extending into the first side surface (13), the first through hole (81) having
a first hole axis (X1) which intersects the first groove portion (41) and
an inner thread formed in a section of the first through hole (81) located between the first groove portion (41) and the first side surface (13) and configured for engagement with an adjustment screw insertable from the side of the first end (3a) and/or from the second side (12),
wherein, optionally, in the plan view of the top surface (5), the first hole axis (X1) is spaced away from an intersection of the end surface (17) and the second side surface (15) with a distance of at least a bore radius of the first through hole (81), and further optionally, the first through hole (81) starts in the end surface (17) and extends with an acute angle formed between the first hole axis (X1) and the longitudinal axis (X), wherein, preferably, the acute angle is in the range of 30° to 70°, more preferably in the range of 45° to 60°, and
the second adjustment means comprises a second through hole (92) starting in the second side surface (15) and extending into the connection portion (45), preferably into the central section (55), of the groove structure (40), the second through hole (92) having an inner thread formed therein and is configured for engagement with an adjustment screw, wherein, optionally, the second through hole (92) is located, in the plan view of the top surface (5), between the insert pocket (19) and second groove portion (42).

11. The tool cartridge (10) according to anyone of the claims 1 to 9, wherein
the first adjustment means comprises an adjustment protrusion (20) protruding from the first side surface (13), preferably, in a plan view of the top surface (5), the adjustment protrusion (20) is located, when seen along the longitudinal axis (X), between the end surface (17) and an end of the insert pocket (19) facing the second end (3b), and
the second adjustment means comprises
a horizontal screw hole (22) starting in the first side surface (13) and extending through the connection portion (45), preferably through the central section (55), of the groove structure (40) towards the second side (12), the horizontal screw hole (22) having an inner thread formed between the first side surface (13) and the connection portion (45) and is configured for engagement with an abutment screw insertable from the first side (11), wherein, optionally, the horizontal through hole (22) is located, in the plan view of the top surface (5), between the insert pocket (19) and second groove portion (42), and
a vertical screw hole (24) starting in the top surface (5) and extending towards the bottom surface (7), wherein the vertical screw (24) hole intersects the horizontal screw hole (22) and has an inner thread formed therein and is configured for engagement with a conical adjustment screw insertable from the top surface (5).

12. A cutting tool (100; 200), comprising:
a holder (101; 201) having a rod shape extending from a first end (103a) to a second end (103b) along a rotation axis (R) and having a cartridge pocket (107),
the tool cartridge (1; 10) according to any one of the preceding claims and
a cutting insert (140),
wherein the cartridge pocket (107)
is located at the first end (103a) and opens into a circumferential surface (109) and an end surface (111) at the first end (103a) of the holder (101; 201), and
has a first seating surface (121) parallel to the rotation axis (R) and facing in a rotation direction of the holder (101; 201), wherein on the first seating surface (121) the bottom surface (7) of the tool cartridge (1; 10) is seated, and has a second seating surface (122) connected to the first seating surface (121) and facing in a radially outward direction of the holder (101; 201), wherein on the second seating surface (122) the first side surface (13) of the tool cartridge (1; 10) is seated, and
wherein the cutting insert (140) is accommodated in the insert pocket (19) of the tool cartridge (1; 10) so that the cutting insert (140) extends radially outward of the circumferential surface (109) of the holder (101; 201) and extends axially outward of the end surface (17) of the holder (101; 201).

13. The cutting tool (100) according to claim 12 with the tool cartridge (1) according to claim 10, the cutting tool (100) further comprising:
a first adjustment screw (160) in engagement with the inner thread of the first through hole (81), wherein a tip of the first adjustment screw (160) is configured for protruding from the first side surface (13) radially inwards towards the rotation axis (R) and abutting on the second seating surface (122) of the cartridge pocket (107), wherein the insert pocket (19) is elastically biased radially outwards of the holder (101) for adjusting a cutting diameter (D) of the cutting tool (100) by increasing or reducing a protrusion amount of the first adjustment screw (160) and,
a second adjustment screw (170) in engagement with the inner thread of the second through hole (92), wherein a tip of the second adjustment screw (170) is configured for protruding into the connection portion (45) of the groove structure (40) and abutting on a wall of the connection portion (45) located on the first side (11), wherein the insert pocket (19) is elastically biased radially outwards of the holder (101) for adjusting a taper (T) of the cutting tool (100) by increasing or reducing the protrusion amount of the second adjustment screw (170).

14. The cutting tool (200) according to claim 12 with the tool cartridge (10) according to claim 11, wherein the holder (201) has a reception screw hole (203) formed in the end surface (111) and adjacent to the second seating surface (122), and the adjustment protrusion (20) protrudes into the reception screw hole (203), the cutting tool (200) further comprising:
a first conical screw (260) inserted into the reception screw hole (203) with a conical head (263) contacting the adjustment protrusion (20), wherein the insert pocket (19) is elastically biased radially outwards of the holder (201) for adjusting a cutting diameter (D) of the cutting tool (200) by increasing or reducing an amount by which the first conical screw (260) is screwed into the reception screw hole (203),
an abutment screw (270) inserted into the horizontal screw hole (22), wherein a tip of the abutment screw (270) protrudes into the vertical screw hole (24), and
a second conical screw (280) inserted into the vertical screw hole (24) with a conical head (283) contacting the tip of the abutment screw (270), wherein the insert pocket (19) is elastically biased radially outwards of the holder (201) for adjusting a taper (T) of the cutting tool (200) by increasing or reducing the amount by which the of the second conical screw (280) is screwed into the vertical screw hole (24).

15. A method for adjusting a cutting tool (100) according to claims 12 to 14, the method comprising:
measuring a first distance between the rotation axis (R) of the holder (101) and a first radially outer corner of the cutting insert (140) located closest to the first end (103a) of the holder (101),
increasing or reducing the first distance by increasing or reducing a biasing force of the first adjustment means,
measuring a second distance between the rotation axis (R) of the holder (101) and a second radially outer corner of the cutting insert (140) located further away from the first end (103a) of the holder (101) than the first corner, and
increasing or reducing the second distance by increasing or reducing a biasing force of the second adjustment means.
